**Europäisches Patentamt**

**European Patent Office**

**Office européen des brevets**

(19)

(11) Veröffentlichungsnummer: **0 246 420**
**A1**

(12) ## EUROPÄISCHE PATENTANMELDUNG

(21) Anmeldenummer: **87104161.2**

(22) Anmeldetag: **20.03.87**

(51) Int. Cl.³: **B 65 G 17/12**

(30) Priorität: **17.05.86 DE 3616801**

(43) Veröffentlichungstag der Anmeldung:
**25.11.87 Patentblatt 87/48**

(84) Benannte Vertragsstaaten:
**ES FR GB IT NL SE**

(71) Anmelder: **O & K Orenstein & Koppel Aktiengesellschaft**
**Brunsbütteler Damm 144**
**D-1000 Berlin(DE)**

(72) Erfinder: **Krüger, Rolf, Dipl.-Ing.**
**Kronsforder Koppel 22**
**D-2400 Lübeck(DE)**

(74) Vertreter: **Möllering, Karl Friedrich**
**Elsässer Strasse 31**
**D-2400 Lübeck(DE)**

(54) **Gurtbecherwerk für Senkrechtförderer.**

(57) Gurtbecherwerkes des ist im senkrechten oder etwa senkrecht verlaufenden Gurtteil quer zur Laufrichtung gefaltet, wobei im Bereich der Senkrechtstrecke am Traggerüst (4) des Becherwerkes V-förmig zueinander gestellte Ablenkrollen (6) angeordnet sind.

Fig. 1

Fig. 2

Fig. 3

Fig. 4

Fig. 5

EP 0 246 420 A1

DR. RER. POL. DR.-ING.

# KARL F. MÖLLERING
## PATENTANWALT
Professional Representative before the European Patent Office
Mandataire agréé prés l'Office Européen des Brevets

2400 LÜBECK
ELSASSER STR.
FERNRUF 045: **0246420**

Bankkonto:
Dresdner Bank AG
Postscheckkonto: H

Dr. Dr. Mö/Fa
PAT 5899


O&K Orenstein & Koppel Aktiengesellschaft, Berlin


### Gurtbecherwerk für Senkrechtförderer


Die Erfindung betrifft ein Gurtbecherwerk für Senkrechtförderer. Bei derartigen Gurtbecherwerken ist es bekannt, den Gurt durch die Anordnung von sich seitlich gegen die Gurtkanten liegenden Seitenrollen zu schnüren. Dabei entsteht die Gefahr, daß die Seitenrollen vom Gurt überlaufen werden und daß dadurch der Gurt zerstört wird. Außerdem wird die Antriebskraft für die Bewegung des Gurtes erhöht. Diese Nachteile sind besonders bei der Verwendung verhältnismäßig langer Senkrechtförderer von Bedeutung, wie sie beispielsweise bei der kontinuierlichen Schiffsentladung von Massengütern eingesetzt werden.

Der Erfindung liegt die Aufgabe zugrunde, ein Gurtbecherwerk für Senkrechtförderer so auszubilden, daß ohne die Verwendung von Seitenrollen ein Geradlauf des Gurtes im senkrechten Förderteil insbesondere bei großen Förderhöhen erzwungen wird. Die Erfindung wird durch die Merkmale des Hauptanspruches gelöst, durch die ein Geradlauf des Gurtes im senkrechten oder etwa senkrecht verlaufenden Gurtteil erzwungen wird.

Außerdem läßt sich die erforderliche Gurtspannung ohne weitere Hilfsmittel aufbringen, die bei großen Förderhöhen beträchtlich groß ist. Gemäß der Erfindung wird der Gurt im aufsteigenden bzw. fallenden Turm gefaltet.

Weitere Merkmale der Erfindung sind Gegenstand der Unteransprüche, die bevorzugte Ausführungsformen der Erfindung betreffen.

Die Erfindung ist anhand der in den Zeichnungen dargestellten Ausführungsbeispiele im folgenden näher erörtert und zwar zeigen

    Fig. 1 - einen Senkrechtförderer in Seitenansicht

    Fig. 2 - einen Schnitt in der Ebene A - A nach Fig. 1

    Fig. 3 - einen Schnitt in der Ebene B - B nach Fig. 1

    Fig. 4 - eine Ansicht in Richtung des Pfeiles C der Fig. 1

    Fig. 5 - einen Schnitt in der Ebene D - D nach Fig. 1

    Fig. 6 - das untere Ende eines Senkrechtförderers im
             vergrößerten Maßstab einer anderen Ausführungsform

    Fig. 7 - einen Schnitt in der Ebene E - E nach Fig. 6

    Fig. 8 - einen Schnitt in der Ebene F - F nach Fig. 6

    Fig. 9 - eine andere Ausführungsform der Becher entsprechend
             Fig. 2

a73178605123101

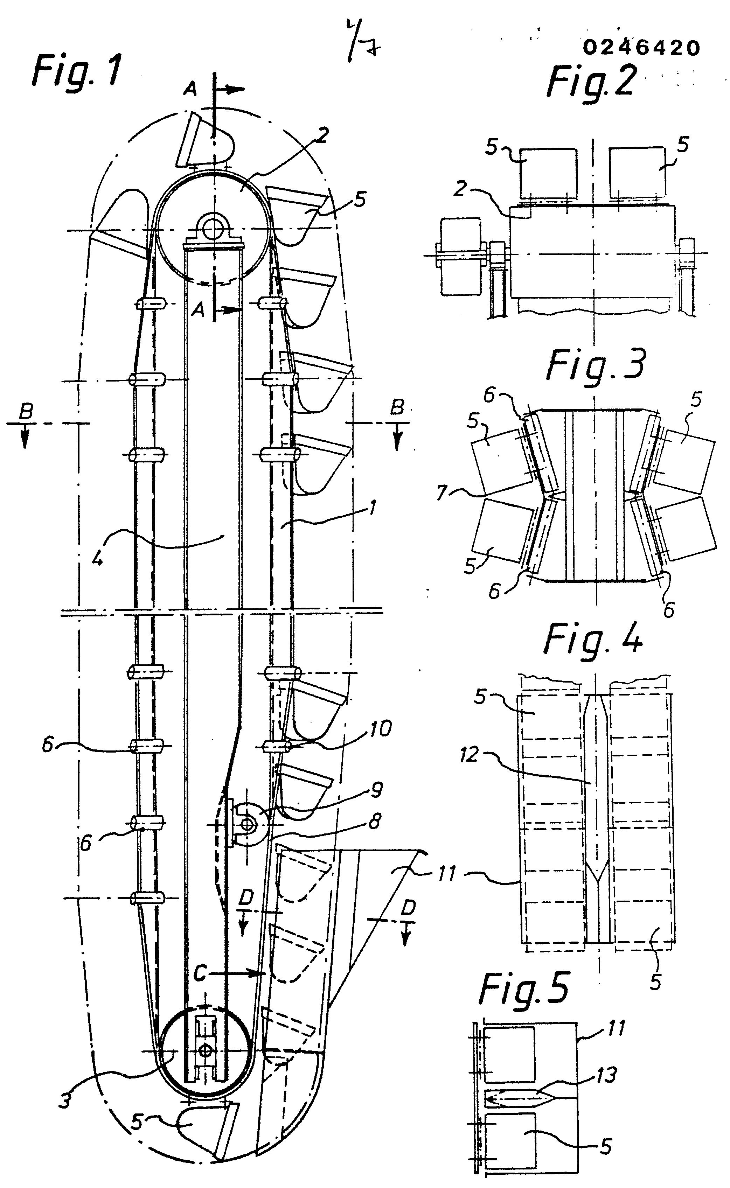

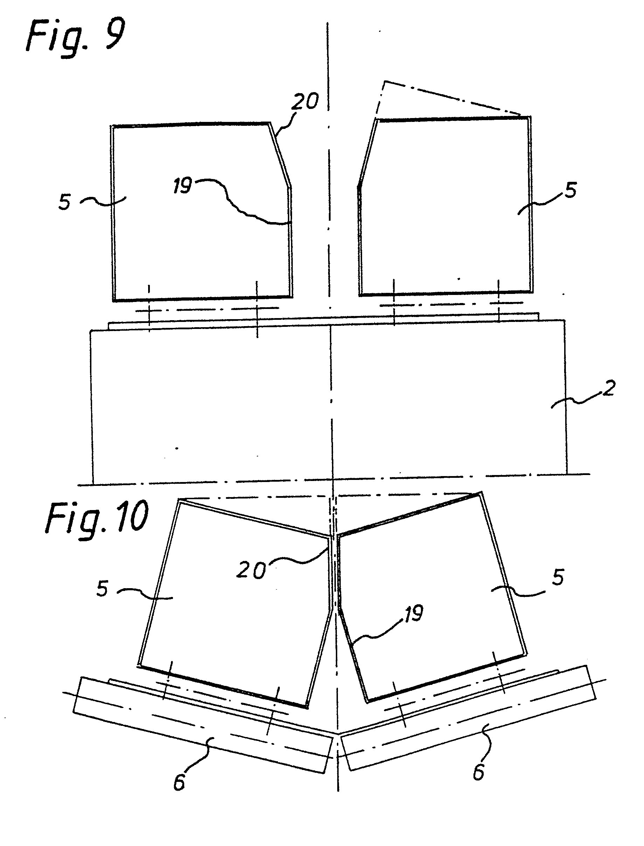

Fig.10 - einen Schnitt der Becherform nach Fig. 9 in der Stellung nach Fig. 3

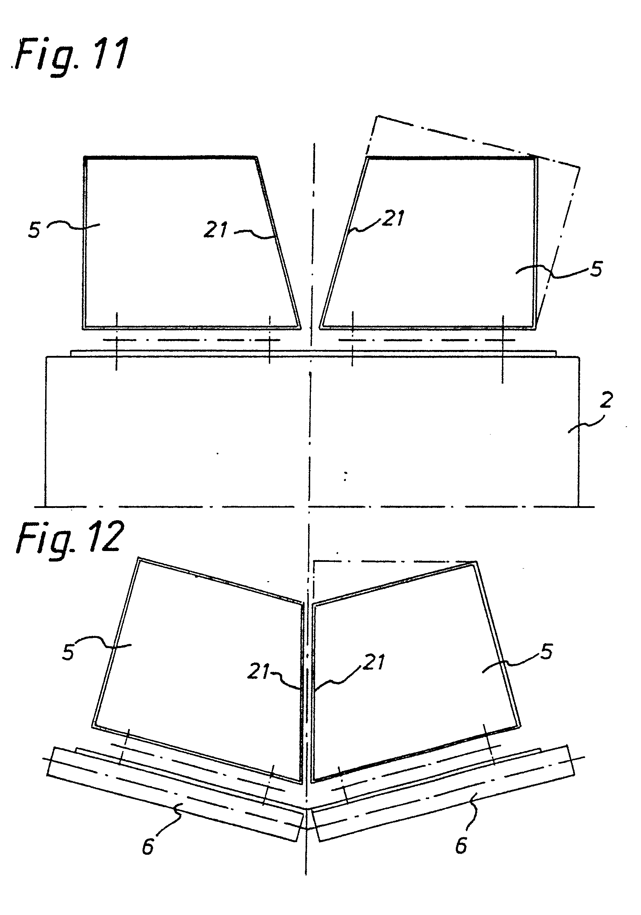

Fig.11 - entspricht wieder der Fig. 2 bei einer anderen Becherform

Fig.12 - einen Schnitt entsprechend Fig. 3 mit der Becherform nach Fig. 11

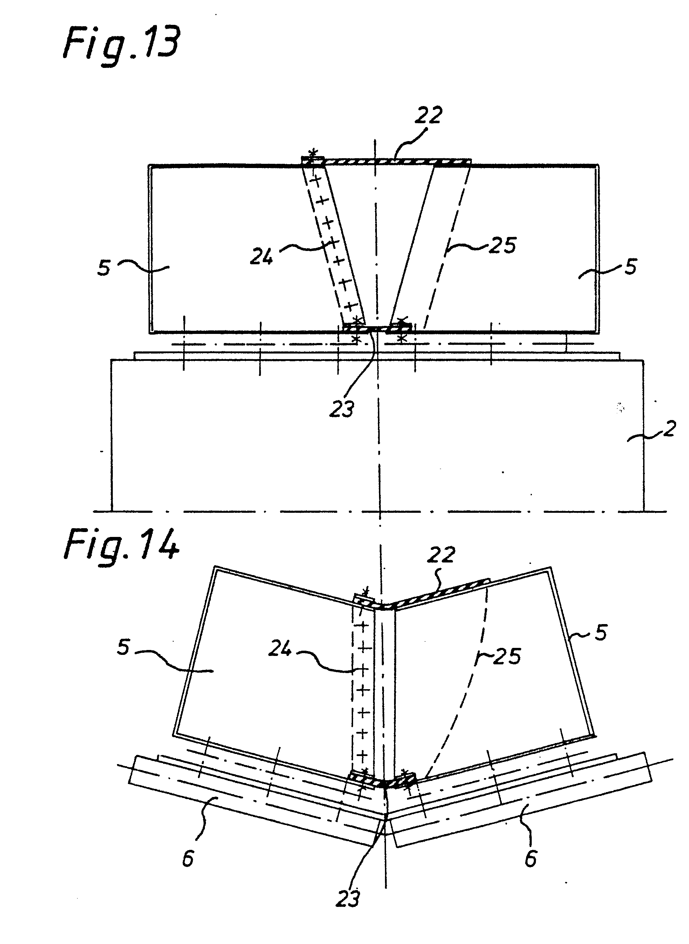

Fig.13 - wiederum eine andere Becherform in der Stellung nach Fig. 2

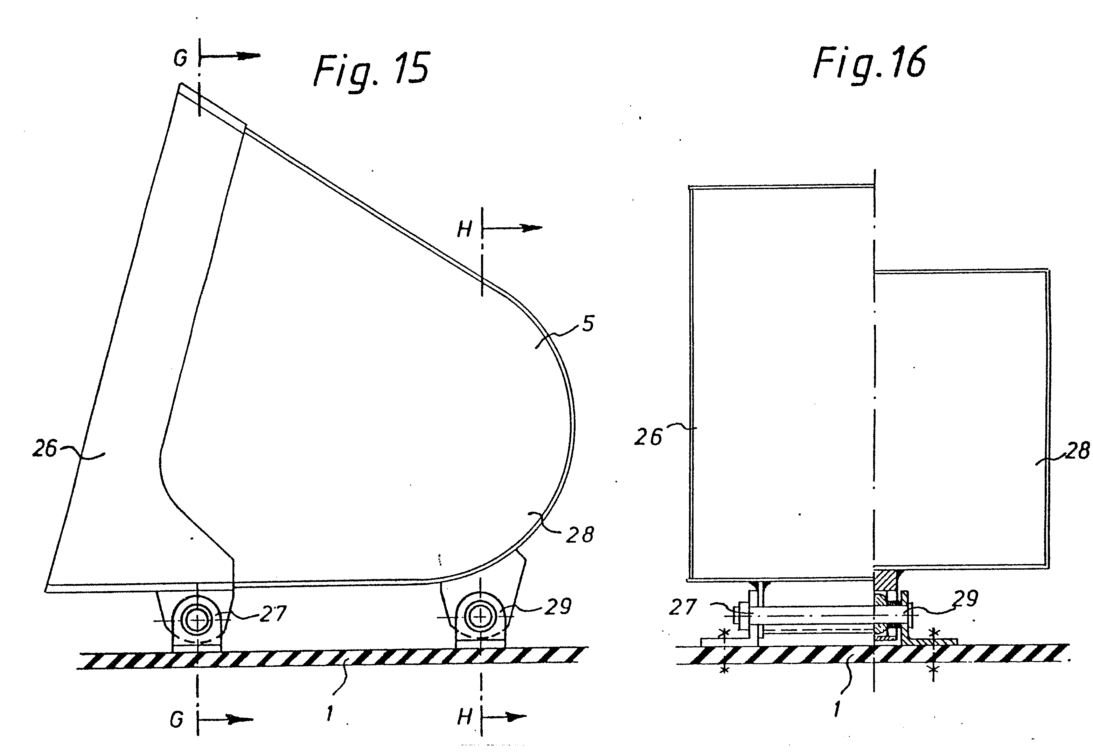

Fig.14 - wiederum die Becherform nach Fig. 13 in der Stellung nach Fig. 3

Fig.15 - eine Seitenansicht eines Bechers

Fig.16 - die Schnitte des Bechers entsprechend Fig. 15 in den Ebenen G - G und H - H nebeneinander

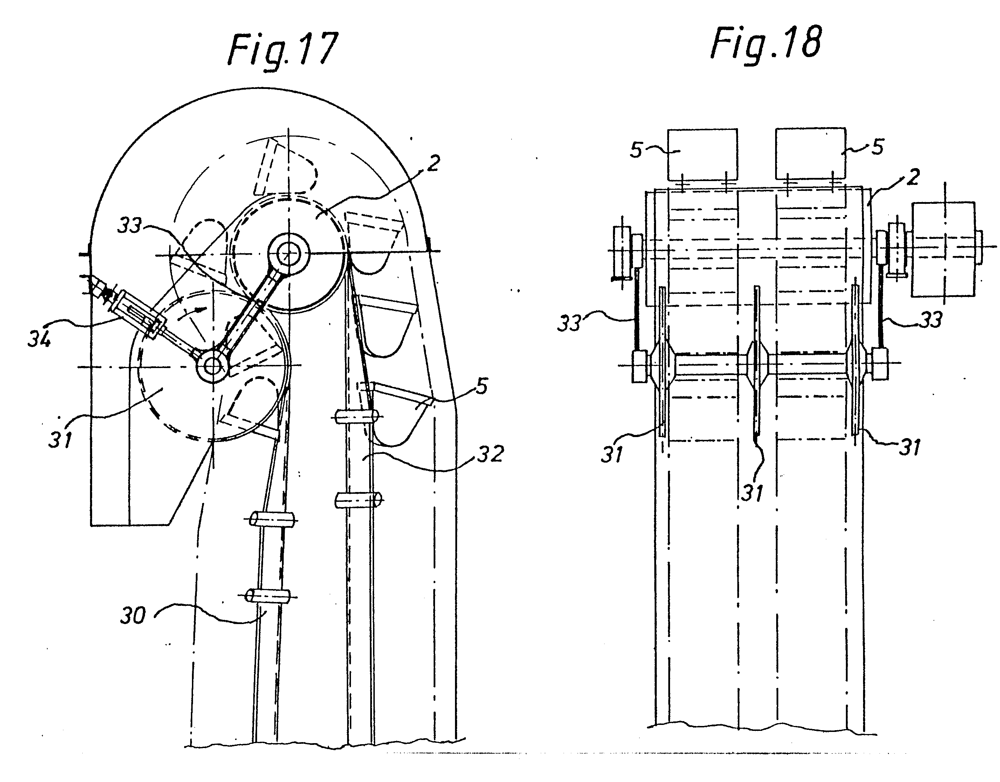

Fig.17 - das obere Ende eines Gurtbecherwerkes in Seitenansicht

Fig.18 - eine Vorderansicht auf die Ausführungsform nach Fig. 17

Das in Fig. 1 dargestellte Gurtbecherwerk besteht aus dem Gurt 1, der über die obere Umlenk- und Antriebstrommel 2 geführt ist. Am unteren Ende läuft der Gurt 1 über die Umlenktrommel 3, die in ansich bekannter Weise verschieb- bzw. verstellbar im Traggerüst 4 gelagert ist. Der Gurt 1 trägt die Becher 5. Es sind zwei Reihen nebeneinander liegende Becher 5 angeordnet, die im Bereich der oberen Umlenktrommel 2 im Abstand von einander liegen.

Am Traggerüst 4 sind im Bereich des senkrecht verlaufenden Gurtteiles V-förmig zueinander gestellte Ablenkrollen 6 angeordnet, durch die der Gurt 1 gefaltet wird, wie Fig. 3 darzeigt. Die Ablenkrollen 6 liegen dem Förderband unter Druck an. Der Winkel zwischen den V-förmig angeordneten Ablenkrollen 6 ist einstellbar. Er richtet sich nach der zulässigen Randdehnung der jeweiligen Gurtkonfektion.

Im Ausführungsbeispiel liegen die einander zugekehrten oberen Seitenkanten 7 der Becher 5 im senkrecht verlaufenden Gurtteil einander etwa an.

Im unteren Bereich des aufsteigenden Gurtteil 8 des Gurtes 1 ist in Förderrichtung gesehen hinter der unteren Umlenktrommel 3 zunächst eine zylindrische Führungsrolle 9 am Traggerüst 4 angeordnet, so daß das Becherwerk in dem Bereich zwischen der unteren Umlenktrommel 3 und dieser Führungsrolle 9 im Querschnitt sich etwa in der Lage nach Fig. 2 befindet. Diese Lage ist in Fig. 4 in Ansicht erkennbar.

In Förderrichtung gesehen folgt hinter der zylindrischen Führungsrolle 9 das erste V-förmig angeordnete Ablenkrollenpaar 10, wodurch nunmehr der Gurt gefaltet wird. Bei dieser Ausführungsform ergibt sich im Bereich der Schurre 11 ein Abstand zwischen den Bechern 5. Dieser kann durch einen Einbau 12 überbrückt werden, der an der Schurre 11 befestigt ist und der im Ausführungsbeispiel durch einen vertikalen Steg gebildet ist. Dieser ist in seinem oberen vorderen Teil schneidenförmig 13 ausgebildet. Durch diese Führung des Gurtes bzw. der Becher wird eine gute Beschickung im unteren Teil des Becherwerkes gewährleistet. Im oberen Teil des Becherwerkes wird der Gurt bei einer entsprechenden Anordnung seiner Ablenkrollen 6 wieder

a73178605123101

0246420

auseinander gefaltet, so daß er in üblicher Weise die obere Antriebs- bzw. Umlenktrommel 2 umläuft, wie Fig. 2 zeigt. Beim Ausführungsbeispiel ist der Gurt sowohl im aufsteigenden als auch im fallenden Trumm gefaltet, wie die linke Seite der Fig. 1 zeigt. Durch diese Faltung wird ein Geradlauf des Gurtes ohne zusätzliche Hilfsmittel und ohne eine Beschädigung des Gurtes erzwungen.

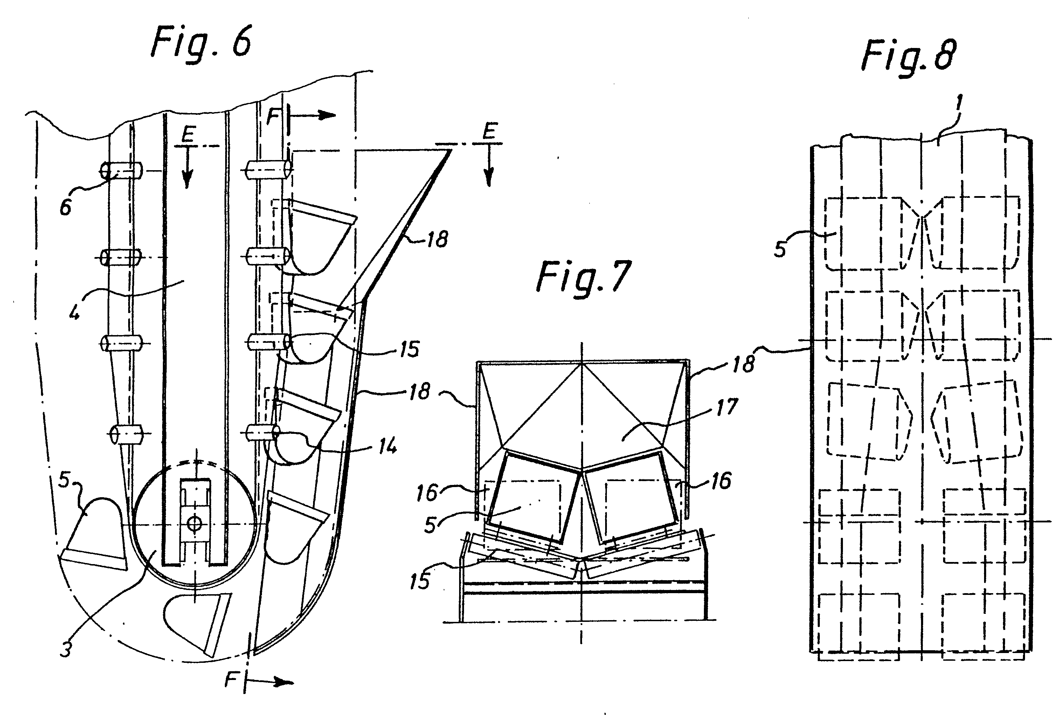

Fig. 6 zeigt eine andere Ausführunsform des unteren Teiles des Senkrechtförderers und der Einlaufschurre. Bei dieser Ausführungsform folgen auf die untere Umlenktrommel 3 sogleich in unterschiedlichen Winkel gegeneinander V-förmig gestellte Ablenkrollenpaare 14,15.

In Fig. 7 erkennt man zunächst in strichpunktierter Linienführung, die unmittelbar nach der unteren Umlenkrolle 3 nebeneinander liegenden Becher 5, die dann später bei der Faltung des Gurtes in ausgezogener Linienführung dargestellte Lage 16 übergehen, bei der sich etwa wie bei Fig. 3 die Kanten 7 der Becher einander berühren oder in unmittelbarer Nähe nebeneinander liegen. Den Übergang der Becher von der einen in die andere Lage ist in Fig. 8 erkennbar. Die Einlaufflächen 17 und 18 der Schurre sind dieser Führung der Becher 5 angepaßt.

In den Fig. 9 - 12 sind zwei unterschiedliche Becherformen dargestellt. Bei der Ausführungsform nach Fig. 9 und 10 sind die Seitenflächen 19 der Becher, die einander gegenüber liegen, in ihrem oberen Bereich 20 abgewinkelt und gegeneinander geneigt, so daß sie im gefalteten Zustand des Gurtes etwa einander anliegen, wie die Fig. 10 zeigt.

In gleicher Weise sind bei der Fig. 11 und 12 die einander gegenüber liegenden Seitenflächen 21 über ihre ganze Länge so

a73178605123101

0246420

geneigt, daß sie im gefalteten Zustand des Gurtes etwa einander anliegen, wie Fig. 12 zeigt.

Die Fig. 13 und 14 zeigen eine weitere Ausführungsform der Becher 5, bei der die einander gegenüberliegenden Seitenwände der Becher fehlen und zur Überbrückung des Abstandes zwischen den Bechern Gummiabdeckungen 22 und 23 vorgesehen sind. Die Gummiabdeckungen 22 und 23 sind an allen vier Becherwänden jeweils an einem der Becher, im Ausführungsbeispiel an dem links dargestellten Becher 5 am Becherrand 24 befestigt. Beim Bewegen der Becher 5 gegeneinander rutscht das lose Seitenteil 25 der Gummiabdeckung 22 über die Seitenwände des anderen Bechers 5. Bei der Ausführungsform nach Fig. 13,14 kann jedoch auch die untere Gummiabdckung 23 an beiden Bechern 5 befestigt sein, so daß sich beim Bewegen der Becher 5 gegeneinander eine Falte in der Überbrückung bildet.

Die Becher 5 können in unterschiedlicher und bekannter Weise am Gurt 1 befestigt sein. Zweckmäßig ist eine Befestigungsart gemäß Fig. 15,16 bei der der vordere Teil 26 des Bechers 5 an seinem Unterteil über zwei Gelenklagerungen 27 mit dem Gurt 1 verbunden ist, während der hintere Becherteil 28 an seinem Unterteil über eine kugelige Abstützung 29 mit dem Gurt verbunden ist. Diese Abstützung ist vorteilhaft, wenn der Becher in die Aufmuldungsstrecke ein- bzw. aus der Aufmuldungsstrecke ausläuft, da sich dann die vordere und hintere Abstützung des Bechers auf unterschiedlichen Winkeln der beginnenden Faltung befinden.

In Fig. 17 und 18 ist das obere Ende eines Becherwerkes dargestellt, das mit einer zusätzlichen Vorrichtung versehen ist, um das Becherwerk in seinem Gesamtquerschnitt auf ein möglichst geringes Maß zu bringen. Dazu wird der absteigende Trumm 30 durch drei scheibenförmige Andruckrollen 31 in Richtung zum aufsteigenden Trumm 32 des Becherwerkes eingeschnürt. Die

a73178605123101

scheibenförmigen Andruckrollen 31 sind um das Zentrum der oberen Antriebstrommel 2 schwenkbar angeordnet und zwar mit Hilfe der Schwenkhebel 33. Um die Andruckrollen 31 auf das gewünschte Maß in Richtung zum anderen Trumm drücken zu können, ist eine Einstellvorrichtung 34 vorgesehen, die an dem vorderen Ende der Schwenkhebel 33 angreift.

Derartige scheibenförmige Andruckrollen 31 können auch im unteren Bereich des absteigenden Trumms 30 angeordnet sein.

O&K Orenstein & Koppel Aktiengesellschaft, Berlin

Ansprüche

1. Gurtbecherwerk für Senkrechtförderer, dadurch gekennzeichnet, daß der Gurt (1) im senkrechten oder etwa senkrecht verlaufenden Gurtteil (8) (Senkrechtstrecke) quer zur Laufrichtung gefaltet ist.

2. Gurtbecherwerk nach Anspruch 1, dadurch gekennzeichnet, daß im Bereich der Senkrechtstrecke am Traggerüst (4) des Becherwerkes (1,5) V-förmig zueinander gestellte Ablenkrollen (6) angeordnet sind, die unter Druck der Rückseite des Gurtes (1) anliegen.

3. Gurtbecherwerk nach Anspruch 1 und 2, dadurch gekennzeichnet, daß zwischen der unteren Umlenktrommel (3) und dem ersten V-förmig angeordneten Ablenkrollenpaar eine zylindrische Führungsrolle (9) angeordnet ist, so daß die Faltung des Gurtes (1) zwischen diesen Rollen (6,9) erfolgt.

4. Gurtbecherwerk nach Anspruch 1 bis 3, dadurch gekennzeichnet, daß der Winkel zwischen den V-förmig zueinander gestellten Ablenkrollen (6) einstellbar ist.

a73178604303101

5. Gurtbecherwerk nach Anspruch 1 bis 4, dadurch gekennzeichnet, daß der Gurt (1) in Förderrichtung gesehen jeweils zwei symetrisch zur Gurtmittellinie angeordnete Becher (5) trägt.

6. Gurtbecherwerk nach Anspruch 5, dadurch gekennzeichnet, daß die Becher (5) derart am Gurt (1) befestigt sind, daß die einander gegenüber liegenden Becherwände bei gefaltetem Gurt (1) einander zumindest in ihrem oberen Bereich der Seitenkanten (7) einander anliegen oder fast einander anliegen, so daß gleichsam eine gemeinsame durchgehende Einlaufkante (Schnittkante) gebildet ist.

7. Gurtbecherwerk nach Anspruch 5 und 6, dadurch gekennzeichnet, daß die einander gegenüberliegenden Seitenflächen (20,21) der Becher (5) ganz oder teilweise gegenüber der Senkrechten geneigt verlaufen, so daß diese Seitenflächen (20,21) im gefalteten Zustand des Gurtes (1) einander anliegen oder fast anliegen.

8. Gurtbecherwerk nach Anspruch 5 bis 6, dadurch gekennzeichnet, daß die eine oder beide einander gegenüberliegenden Seitenwände der Becher (5) entfallen und die anderen Seitenwände der Becher (5) mit Gummiabdeckungen (22,23) zur Überbrückung des Abstandes der Seitenwände versehen sind.

9. Gurtbecherwerk nach Anspruch 5 bis 8 mit einer Einlaufschurre im unteren Aufnahmebereich des Becherwerkes, dadurch gekennzeichnet, daß im noch nicht gefalteten Teil des Gurtes (1) an der Schurre (11) ein Brückenbauteil (13) angeordnet ist, der den Abstand zwischen den nicht einander anliegenden Seitenflächen der Becher (5) überbrückt.

10. Gurtbecherwerk nach Anspruch 1 bis 9, dadurch gekennzeichnet, daß die Becher (5) in einer Dreipunktabstützung (27,29) am Gurt (1) befestigt sind.

a73178604303101

11. Gurtbecherwerk nach Anspruch 10, dadurch gekennzeichnet, daß die Becher im Bereich des Becherrandes an ihrem Becherunterteil über zwei Gelenklagerungen (27) mit dem Gurt (1) und in ihrem hinteren Teil (28) über eine kugelige Abstützung (29) mit dem Gurt (1) verbunden sind.

12. Gurtbecherwerk nach Anspruch 1 bis 11, dadurch gekennzeichnet, daß im Bereich der Umlenktrommeln (2,3) eine oder mehrere scheibenförmige Andruckrollen (31) vorgesehen sind.

13. Gurtbecherwerk nach Anspruch 1 bis 12, dadurch gekennzeichnet, daß die Andruckrollen (31) auf der Seite des absteigenden Trumms (30) angeordnet sind.

0246420

Fig. 1

Fig. 2

Fig. 3

Fig. 4

Fig. 5

Fig.8

Fig.7

Fig.6

0248420

## Fig. 9

## Fig. 10

## Fig. 11

5

21

21

5

2

## Fig. 12

5

21    21

5

6

6

*Fig.13*

*Fig.14*

Fig. 15

Fig.16

Fig.17

Fig.18

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | FR-A- 724 675 (BODIN)<br>* Seite 1, Zeile 59 - Seite 2, Zeile 11 * | 1,5 | B 65 G 17/12 |
| A | PATENT ABSTRACTS OF JAPAN, Band 9, ·Nr. 307 (M-435)[2030], 4. Dezember 1985; & JP - A - 60 144 233 (YAMAGUCHI KIKAI) 30.07.1985 | 1 | |
| A | DE-B-1 038 477<br>(AKTIENGESELLSCHAFT FÜR UNTERNEHMUNGEN DER EISEN- UND STAHLINDUSTRIE)<br>* Spalte 3, Zeilen 25-31 * | 1 | |
| A | DE-B-1 274 967 (HEINRICH KOPPERS)<br>* Spalte 1, Zeilen 1-13; Figuren 1, 2 * | 1 | RECHERCHIERTE SACHGEBIETE (Int Cl 4) |
| A | US-A-3 319 774 (CHRISTENSEN)<br>* Figuren 3, 6 * | 1 | B 65 G 15/00<br>B 65 G 17/00<br>E 02 F 3/00 |

Der vorliegende Recherchenbericht wurde für alle Patentansprüche erstellt.

| Recherchenort<br>BERLIN | Abschlußdatum der Recherche<br>07-08-1987 | Prüfer<br>SIMON J J P |
|---|---|---|

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82